(19) Europäisches Patentamt
European Patent Office
Office européen des brevets

(11) Publication number: 0 179 902 B1

(12) **EUROPEAN PATENT SPECIFICATION**

(45) Date of publication of patent specification: 04.04.90

(51) Int. Cl.$^5$: **C 08 F 299/04**, C 08 F 299/02, C 08 L 63/10, C 08 L 67/06

(21) Application number: 85902774.0

(22) Date of filing: 09.05.85

(86) International application number: PCT/US85/00852

(87) International publication number: WO 85/05365 05.12.85 Gazette 85/26

(54) **A THERMOSETTING, FREE RADICAL CURABLE UNSATURATED POLYMER RESIN COMPOSITION AND A METHOD OF REDUCING GAS GENERATION IN CURING THERMOSETTING, FREE RADICAL CURABLE UNSATURATED POLYMER RESIN COMPOSITIONS.**

(30) Priority: 10.05.84 US 608749

(43) Date of publication of application: 07.05.86 Bulletin 86/19

(45) Publication of the grant of the patent: 04.04.90 Bulletin 90/14

(84) Designated Contracting States: AT BE DE FR GB IT NL SE

(56) References cited:
US-A-2 529 214
US-A-2 607 756
US-A-3 333 021
US-A-3 933 857
US-A-4 303 579
US-A-4 348 506

No relevant documents have been disclosed

(73) Proprietor: THE DOW CHEMICAL COMPANY
2030 Dow Center Abbott Road P.O. Box 1967
Midland Michigan 48640-1967 (US)

(72) Inventor: MESSICK, Virginia, B.
55 Chervil Common
Lake Jackson, TX 77566 (US)
Inventor: HECK, Henry, G.
26 Brookdale Road
Wellesley, MA 02181 (US)

(74) Representative: Sternagel, Hans-Günther, Dr. et al
Patentanwälte Dr. Michael Hann Dr. H.-G. Sternagel Sander Aue 30
D-5060 Bergisch Gladbach 2 (DE)

EP 0 179 902 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The most common room temperature curing system for unsaturated polyester and vinyl ester resin is a combination of a ketone peroxide, typically methyl ethyl ketone peroxide (MEKP), and a redox active metal salt, typically cobalt naphthenate. A tertiary amine such as dimethylaniline is optionally used as an accelerator to speed gelation and cure at low temperatures.

The combination of ketone peroxide, redox active metal and tertiary amine, if used, quite commonly in vinyl esters and occasionally in polyesters results in the liberation of a gas. The release is commonly referred to as foaming or frothing. In closed molding processes this gas is often trapped as bubbles in the finished part, and in hand lay-up processes labor must be applied to work this gas to the surface in order for it to be eliminated. Gas trapped in a part or laminate is generally felt to reduce its corrosion or chemical resistance and its physical properties and thus is sometimes cause for part rejection. Since it is nearly impossible to determine whether bubbles trapped in a laminate are due to peroxide foaming or any of a number of other sources, fabricators prefer to use a resin that does not foam simply to eliminate one possible contributor to part rejection.

The characteristic common to the unsaturated resins for which a cure system of a ketone peroxide and redox active metal causes foaming, is that they have a pH greater than 4.5 measured as a 10 percent by weight methanol solution and contain a tertiary amine.

The present invention is a thermosetting resin composition having a reduced tendency to generate gas when cured which comprises:

(a) a thermosetting, free radical curable, unsaturated polymer resin having a pH greater than 4.5 measured as a 10 weight percent methanol solution;
(b) optionally, a monomer copolymerizable with the unsaturated polymer resin;
(c) a tertiary amine as an esterification catalyst and/or an accelerator;
(d) a curing system comprising a ketone peroxide and a redox active metal salt; and
(e) an effective amount of an organic sulfonic acid to reduce gas generation upon curing of the resin composition.

The present invention also comprises a method of curing thermosetting, free radical curable, unsaturated polymer resin composition having a pH greater than 4.5 measured as a 10 weight percent methanol solution and containing a tertiary amine as an esterification catalyst and/or an accelerator, such resin being admixed with a copolymerizable monomer, wherein a curing system of a ketone peroxide and a redox active metal salt is employed. The method is characterized by adding an effective amount of an organic sulfonic acid to the resion prior to curing, whereby gas generation upon curing is reduced. This method results in cured resins with reduced gas entrapment (foam reduction).

The unsaturated polymer for which the organic sulfonic acid reduces peroxide foam generation is a thermosetting, free radical curable resin having a pH greater than 4.5 as measured as a 10 weight percent methanol solution. Included as preferred subgenera are vinyl ester resins, unsaturated polyester resins, vinyl-capped polyester resins or blends and mixtures of these three materials.

Vinyl ester resins are described in U.S. Patent No. 3,367,992 wherein dicarboxylic acid half esters of hydroxyalkyl acrylates or methacrylates are reacted with polyepoxide resins. Bowen, in U.S. Patent Nos. 3,066,112 and 3,179,623, describes the preparation of vinyl ester resins from monocarboxylic acids such as acrylic and methacrylic acid. Bowen also describes alternate methods of preparation wherein a glycidyl methacrylate or acrylate is reacted with the sodium salt of a dihydric phenol such as bisphenol A. Vinyl ester resins based on epoxy novolac resins are described in U.S. Patent No. 3,301,743 to Fekete et al. (Fekete). Fekete also describe, in U.S. Patent No. 3,256,226, vinyl ester resins wherein the molecular weight of the polyepoxide is increased by reacting a dicarboxylic acid with the polyepoxide resin as well as acrylic acid, etc. U.S. Patent Nos. 3,892,819, 3,933,935 and 4,111,770 teach the use of tertiary amines, such as tris(2,4,6-dimethylaminoethyl)phenol, as esterification catalysts for the preparation of vinyl ester resins. These references teach using this catalyst in an amount of about 0.1 weight percent based upon the weight of the reactants. Other difunctional compounds containing a group which is reactive with an epoxide group such as, for example, an amine or mercaptan may be utilized in place of the dicarboxylic acid. All of the above described resins, which contain the characteristic linkages

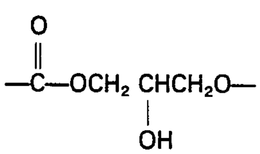

and terminal, polymerizable vinylidene groups, are classified as vinyl ester resins.

Briefly, any of the known polyepoxides may be employed in the preparation of the vinyl ester resins of this invention. Useful polyepoxides are glycidyl polyethers of both polyhydric alcohols and polyhydric phenols, epoxy novolacs, epoxidized fatty acids or drying oil acids, epoxidized diolefins, epoxidized diunsaturated acid esters as well as epoxides of unsaturated polyesters, as long as they contain more than one oxirane group per molecule.

Preferred polyepoxides are glycidyl polyethers of polyhydric alcohols or polyhydric phenols having weights per epoxide group of 150 to 2000. These polyepoxides are usually made by reacting at least two moles of an epihalohydrin or glycerol dihalohydrin with one mole of the polyhydric alcohol or polyhydric phenol and a sufficient amount of a caustic alkali to combine with the halogen of the halohydrin. The products are characterized by the presence of more than one epoxide group per molecule; i.e., a 1,2-epoxy equivalency greater than one.

Unsaturated monocarboxylic acids include, for example, acrylic acid, methacrylic acid, halogenated acrylic or methacrylic acid, cinnamic acid, and mixtures thereof. Also included within the term "unsaturated monocarboxylic acids" are the hydroxyalkyl acrylate or methacrylate half esters of dicarboxyl acids as described in U.S. Patent No. 3,367,992 wherein the hydroxyalkyl group preferably has from 2 to 6 carbon atoms.

Polymerization inhibitors, commonly called process inhibitors, such as t-butyl catechol, monomethyl ether of hydroquinone (MEHQ) or hydroquinone, are advantageously added to prevent premature polymerization during the preparation of the vinyl ester resin or the unsaturated polyester.

Unsaturated polyesters are available commercially or may be generally prepared by heating a mixture of polyhydric alcohol with an unsaturated dicarboxylic acid or anhydride and, if desired, an acid without vinyl unsaturation, in the proper molar proportions at elevated temperatures, usually at 150° to 225°C for a period of time ranging from 1 to 5 hours. The condensation reaction is continued until the acid content drops to the desired level, which for this invention usually means that the resulting monomer diluted polyester has a pH greater than 4.5 measured as a 10 percent methanol solution.

Vinyl-capped polyester resins are available commercially or may be generally prepared by reacting an unsaturated polyester such as described above, but of any pH, to a monocarboxylic acid, such as previously described, by means of a urethane linkage or linkages.

The peroxide foam generation of blends of vinyl ester, polyester and vinyl-capped polyester resins is also reduced by the addition of an organic sulfonic acid. The blends may be prepared either by physically mixing the resins in the desired proportions or by preparing said vinyl ester resin in the presence of said unsaturated polyester and/or vinyl-capped polyester.

Preferably, as is generally true in the thermosettable resin art, the resin phase is blended with a copolymerizable monomer. Suitable monomers include vinyl aromatic compounds such as, for example, styrene, vinyl toluene, and divinyl benzene. Other useful monomers include the esters of saturated alcohols such as methyl, ethyl, isopropyl, octyl, etc., with acrylic acid or methacrylic acid; vinyl acetate, diallyl maleate, diallyl phthalate, dimethyl fumarate; mixtures of the same and all other monomers which are capable of copolymerizing with the vinyl ester resin.

Peroxides for which the addition of an organic sulfonic acid reduces peroxide foam generation are ketone peroxides such as methyl ethyl ketone and 2,4-pentanedione diperoxide. Preferably, the ketone peroxide is added in an amount from 0.1 to 10 weight percent of resin plus copolymerizable monomer.

The cure system also includes known redox active metal salts, in an amount to provide from 0.0001 to 0.1 weight percent metal based on the weight of resin plus copolymerizable monomer. Such salts include the naphthenates, octoates, and other salts of cobalt, manganese, nickel, vanadium and molybdenum.

Other accelerators which may be employed in addition to the metal salts typically are dimethylaniline, N,N-dimethyltoluidine, N,N-dimethylacetoacetamide, and similar amines. The amount of these amines will vary, preferably from zero to 0.5 percent by weight of the resin plus copolymerizable monomer.

The formulation of an unsaturated resin with a ketone peroxide and redox active metal as described will result in generation of gas (peroxide foam). The addition of an organic sulfonic acid by the resin manufacturer or formulator will reduce this undesirable gas generation. A preferred class of sulfonic acid is aromatic sulfonic acid. Preferred species are paratoluene sulfonic acid, benzene sulfonic acid and chlorobenzene sulfonic acid. The "effective amount" of organic sulfonic acid to be added is that amount which will reduce the gas generation (foam reduction). While even very minor amounts will cause some foam reduction, the amount of acid added is preferably from 0.1 to one percent by weight of the resin plus copolymerizable monomer, more preferably from 0.15 to 1 percent. Below 0.1 weight percent, comparatively small improvement is obtaioned. Above about 1 weight percent, the acid can interfere with the curing of the resin.

The concept of the innovation is demonstrated in the following examples. The resins used in the examples have a pH of greater than 4.5 when measured as a 10 weight percent methanol solution and are made as follows:

Resin A

Bisphenol A was catalytically (a phosphonium acetate, acetic acid complex catalyst) reacted with a glycidyl polyether of bisphenol A having an epoxide equivalent weight (EEW) between 182 and 190 at 150°C under nitrogen atmosphere for 1½ hours to form a polyepoxide having an EEW of 535. After cooling to 110°C additional glycidyl polyether of bisphenol A was added with methacrylic acid, hydroquinone and tris-(2,4,6-dimethylaminoethyl)phenol. The mixture was reacted to a carboxyl content of about 1 percent. The final vinyl ester resin was diluted with styrene. The components of the final resin composition are:

| | Weight Percent |
|---|---|
| bisphenol A | 8.0 |
| glycidyl polyether of bisphenol A | 36.3 |
| methacrylic acid | 10.7 |
| Tris(2,4,6-dimethylaminoethyl)phenol | 0.06 |
| styrene | 45.0 |

Resin B

A vinyl ester resin was prepared by reacting about one equivalent of methacrylic acid with 0.75 equivalent of an epoxy novolac having an epoxide equivalent weight (EEW) between 175 and 182 and 0.25 equivalent of a glycidyl polyether of bisphenol A having an EEW between 182 and 190. The above reactants were heated to 115°C with catalyst (same one as Example 1) and hydroquinone present until the carboxylic acid content reached about one percent. The reactants were cooled and then styrene (containing 50 ppm of t-butyl catechol) was added. The component of the final resin are:

| | Weight Percent |
|---|---|
| styrene | 36.0 |
| methacrylic acid | 20.1 |
| epoxy novolac | 32.7 |
| glycidyl polyether of bisphenol A | 11.2 |
| tris(2,4,6-dimethylaminoethyl)phenol | 0.06 |

Resin C

A vinyl ester resin was prepared in a similar manner to Resin A. The components of the final resin are:

| | Weight Percent |
|---|---|
| bisphenol A | 10.8 |
| glycidyl polyether of bisphenol A | 35.4 |
| methacrylic acid | 8.8 |
| styrene | 45.0 |
| Tris(2,4,6-dimethylaminoethyl)phenol | 0.06 |

The peroxide foam generated by the ketone peroxide/redox active metal cure system is measured by the following technique:

To a 50 cc calibrated syringe fitted with a stopcock, 20 g resin, 5 g styrene and 0.12 cobalt naphthenate solution are added. After mixing and degassing, 0.49 g of 9 percent active oxygen methyl ethyl ketone peroxide is added. After mixing, the stopcock is closed and a slight vacuum pulled on the syringe. The volume of gas evolved is read from the syringe.

Example 1 and Comparative Run A

To a sample of Resin A was added 1800 ppm (0.18 weight percent) (based on vinyl ester resin and styrene) paratoluene sulfonic acid (p-TSA). The resin sample containing p-TSA (Example 1) and a resin sample with no p-TSA added was catalyzed with 2.45 weight percent of a mixture of 50 weight percent methyl ethyl ketone peroxide in dimethyl phthalate (9 percent active oxygen) and 0.6 percent cobalt naphthenate (6 percent cobalt in mineral spirits), and the gas evolved was measured (Table I) using the procedure described above.

TABLE I

| Resin | cc of Gas Evolved |
|---|---|
| Resin A – Comparative Run A | 2.92 |
| Resin A + 1800 ppm p-TSA — Example 1 | 0.93 |

A hand lay-up laminate of Resin A and 1800 ppm p-TSA (based on vinyl ester resin plus styrene) was constructed using two layers of chopped strand mat and two C-veils. The resin was catalyzed with 1.25 weight percent of a mixture of 50 weight percent methyl ethyl ketone peroxide in dimethyl phthalate (9 percent active oxygen), 0.3 percent cobalt naphthenate solution (6 percent cobalt in mineral spirits) and 0.025 percent N,N-dimethylaniline. The time required to wet out greater than 90 percent of the glass fibers was rated as was the gel time of the resin. The laminate was allowed to cure at room temperature and then was examined for air bubbles trapped in the resin/glass media. The same procedure was used to prepare a laminate from Resin A without the addition of p-TSA. The results are shown in Table II.

TABLE II

| Resin | Time to Wet >90 percent of fibers (min) | Gel Time (min) | Trapped Air Bubbles |
|---|---|---|---|
| Resin A — Comparative Run A | 6.6 | 27.2 | Significant amount |
| Resin A plus 1800 ppm p-TSA — Example 1 | 5.7 | 34.9 | nil |

Example 2 and Comparative Run B

To a sample of Resin B was added 1800 ppm p-TSA (based on vinyl ester resin plus styrene). The resin was catalyzed and the gas evolved measured using the procedure given in Example 1. A companion sample of Resin B without p-TSA was also run. The results are shown in Table III.

TABLE III

| Resin | cc of Gas Evolved |
|---|---|
| Resin B – Comparative Run B | 3.0 |
| Resin B + 1800 ppm p-TSA — Example 2 | 1.0 |

Examples 3—5 and Comparative Run C

Various aromatic sulfonic acids were added to Resin C. The resins were catalyzed and the gas evolved measured using the procedure given in Example 1 with the results shown in Table IV.

TABLE IV

| Additive | cc of Gas Evolved |
|---|---|
| Resin C — Comparative Run C | 1.0 |
| 1800 ppm benzene sulfonic acid — Example 3 | 0.30 |
| 1800 ppm p-toluene sulfonic acid — Example 4 | 0.44 |
| 1800 ppm 4-chlorobenzene sulfonic acid — Example 5 | 0.55 |

**Claims**

1. A resin composition having a reduced tendency to generate gas when cured which comprises:

(a) a thermosetting, free radical curable, unsaturated polymer resin having a pH greater than 4.5 measured as a 10 weight percent methanol solution;

(b) optionally, a monomer copolymerizable with the unsaturated polymer resin;

(c) a tertiary amine as an esterification catalyst and/or an accelerator;

(d) a curing system comprising a ketone peroxide and a redox active metal salt; and

(e) an organic sulfonic acid in an effective amount to reduce gas generation upon curing of the resin composition.

2. The composition of Claim 1 wherein the thermosetting resin is a vinyl ester resin.

3. The composition of Claim 1 wherein the thermosetting resin is an unsaturated polyester resin.

4. The composition of Claim 1 wherein the copolymerizable monomer is a vinyl monomer.

5. The composition of Claim 1 wherein the organic sulfonic acid is added in an amount of from 0.1 to 1 weight percent of (a) and (b).

6. A method of curing a thermosetting, free radical curable, unsaturated polymer resin composition having a pH greater than 4.5 measured as a 10 weight percent methanol solution and containing a tertiary amine as an esterification catalyst and/or an accelerator, such resin being admixed with a copolymerizable monomer, wherein a curing system of a ketone peroxide and a redox active metal salt is employed, characterized by adding an effective amount of an organic sulfonic acid to the resin prior to curing whereby gas generation upon curing is reduced.

7. The method of Claim 6 wherein the thermosetting resin is a vinyl ester resin.

8. The method of Claim 6 wherein the thermosetting resin is an unsaturated polyester resin.

9. The method of Claim 6 wherein the copolymerizable monomer is a vinyl monomer.

10. The method of Claim 6 wherein the organic sulfonic acid is added in an amount of from 0.1 to 1 weight percent of the resin plus the copolymerizable monomer.

**Patentansprüche**

1. Harzzusammensetzung mit geringer Neigung zur Gasentwicklung beim Härten, enthaltend

(a) ein wärmehärtendes, durch freie Radikale härtbares, ungesättigtes Polymerharz mit einem in 10 Gew.-% methanolischer Lösung gemessenen pH-Wert von mehr als 4,5,

(b) gegebenenfalls ein mit dem ungesättigten Polymerharz copolymerisierbares Monomer,

(c) ein tertiäres Amin als Veresterungskatalysator und/or Beschleuniger,

(d) ein ein Ketonperoxid und ein redoxaktives Metallsalz enthaltendes Härtungssystem und

(e) eine organische Sulfonsäure in einer zum Reduzieren des sich beim Härten der Harzzusammensetzung entwickelnden Gases wirksamen Menge.

2. Zusammensetzung nach Anspruch 1, dadurch gekennzeichnet, daß das wärmehärtende Harz ein Vinylesterharz ist.

3. Zusammensetzung nach Anspruch 1, dadurch gekennzeichnet, daß das wärmehärtende Harz ein ungesättigtes Polyesterharz ist.

4. Zusammensetzung nach Anspruch 1, dadurch gekennzeichnet, daß das copolymerisierbare Monomer als Vinylmonomer ist.

5. Zusammensetzung nach Anspruch 1, dadurch gekennzeichnet, daß die organische Sulfonsäure in einer Menge von 0,1—1 Gew.-% von (a) und (b) zugesetzt ist.

6. Verfahren zur Härtung einer wärmehärtenden, durch freie Radikale härtbaren, ungesättigten Polymerharzzusammensetzung mit einem in 10 Gew.-% methanolischer Lösung gemessenen pH-Wert von mehr als 4,5, die ein tertiäres Amin als Veresterungskatalysator und/oder Beschleuniger enthält, durch Mischen des Harzes mit einem copolymerisierbaren Monomer, wobei ein Härtungssystem aus einem Ketonperoxid und einem redoxaktiven Metallsalz verwendet wird, gekennzeichnet durch Zugeben einer wirksamen Menge einer organischen Sulfonsäure vor dem Härten des Harzes, so daß die Gasentwicklung beim Härten verringert ist.

7. Verfahren nach Anspruch 6, dadurch gekennzeichnet, daß das wärmehärtende Harz ein Vinylesterharz ist.

8. Verfahren nach Anspruch 6, dadurch gekennzeichnet, daß das wärmehärtende Harz ein ungesättigtes Polyesterharz ist.

9. Verfahren nach Anspruch 6, dadurch gekennzeichnet, daß das copolymerisierbare Monomer ein Vinylmonomer ist.

10. Verfahren nach Anspruch 6, dadurch gekennzeichnet, daß die organische Sulfonsäure in einer Menge von 0,1—1 Gew.-% des Harzes plus copolymerisierbarem Monomer zugesetzt wird.

**Revendications**

1. Une composition de résine, présentant une tendance réduite à former des gaz lorsqu'elle est réticulée, qui comprend:

(a) une résine polymère insaturée, thermodurcissable, réticulable par radicaux libres, dont le pH, mesuré sur une solution méthanolique à 10 pourcent en poids, est supérieur à 4,5;

(b) facultativement, un monomère copolymérisable avec la résine polymère insaturée;

(c) une amine tertiaire comme catalyseur d'esterification et/ou accélérateur;

(d) un système de réticulation comprenant un peroxyde de cétone et un sel de métal exerçant une activité oxydo-réductrice;

(e) un acide organique sulfonique, présent en une quantité efficace pour réduire la formation de gaz lors de la réticulation de la composition de résine.

2. La composition de la revendication 1, dans laquelle la résine thermodurcissable est une résine d'ester vinylique.

3. La composition de la revendication 1, dans laquelle la résine thermodurcissable est une résine polyester insaturée.

4. La composition de la revendication 1, dans laquelle le monomère copolymérisable est un monomère vinylique.

5. La composition de la revendication 1, dans laquelle l'acide organique sulfonique est ajouté en une quantité comprise entre 0,1 et 1 pourcent du poids de (a) et (b).

6. Un procédé pour réticuler une composition de résine polymère insaturée, thermodurcissable, réticulable par radicaux libres, dont le pH, mesuré sur une solution méthanolique à 10 pourcent en poids, est supérieur à 4,5, et qui contient une amine tertiaire comme catalyseur d'estérification et/ou accélérateur, cette résine étant mélangée avec un monomère copolymérisable, dans lequel on emploie un système de réticulation comprenant un peroxyde de cetone et un sel de métal exerçant une activité oxydo-réductrice, caractérisé par l'addition, préalable à la réticulation, d'une quantité efficace d'un acide organique sulfonique, grâce à quoi la formation de gaz lors de la réticulation est réduité.

7. Le procédé de la revendication 6, dans lequel la résine thermodurcissable est une résine d'ester vinylique.

8. Le procéde de la revendication 6, dans lequel la résine thermodurcissable est une résine polyester insaturée.

9. Le procédé de la revendication 6, dans lequel le monomère copolymèrisable est un monomère vinylique.

10. Le procédé de la revendication 6, dans lequel l'acide organique sulfonique est ajouté en une quantité comprise entre 0,1 et 1 pourcent du poids total de la résine et du monomère copolymérisable.